(19) **Europäisches Patentamt**

**European Patent Office**

**Office européen des brevets**

(11) **EP 1 118 043 B1**

(12) **EUROPÄISCHE PATENTSCHRIFT**

(45) Veröffentlichungstag und Bekanntmachung des Hinweises auf die Patenterteilung:
**20.04.2005   Patentblatt 2005/16**

(21) Anmeldenummer: **99950589.4**

(22) Anmeldetag: **01.10.1999**

(51) Int Cl.⁷: **G05B 5/01**

(86) Internationale Anmeldenummer:
**PCT/EP1999/007279**

(87) Internationale Veröffentlichungsnummer:
**WO 2000/022485 (20.04.2000 Gazette 2000/16)**

(54) **VERFAHREN UND SCHALTUNGSANORDNUNG ZUR AUTOMATISCHEN PARAMETRIERUNG EINES SCHNELLEN DIGITALEN DREHZAHLREGELKREISES**

METHOD AND CIRCUIT CONFIGURATION FOR AUTOMATICALLY PARAMETERIZING A RAPID DIGITAL SPEED CONTROL CIRCUIT

PROCEDE ET CIRCUIT POUR PARAMETRER AUTOMATIQUEMENT UN CIRCUIT DE REGULATION DE VITESSE NUMERIQUE RAPIDE

(84) Benannte Vertragsstaaten:
**DE FR GB**

(30) Priorität: **09.10.1998  DE 19846637**

(43) Veröffentlichungstag der Anmeldung:
**25.07.2001   Patentblatt 2001/30**

(73) Patentinhaber: **Dr. Johannes Heidenhain GmbH 83292 Traunreut (DE)**

(72) Erfinder: **KERNER, Norbert D-83374 Traunwalchen (DE)**

(56) Entgegenhaltungen:
| | |
|---|---|
| **EP-A- 0 817 377** | **DE-A- 2 520 649** |
| **DE-A- 3 408 551** | **DE-A- 19 516 402** |
| **DE-A- 19 734 208** | **US-A- 5 587 899** |

**Beschreibung**

Die Erfindung betrifft ein Verfahren zur automatischen Parametrierung eines schnellen digitalen Drehzahlregelkreises nach dem Oberbegriff des Anspruchs 1 und eine Schaltungsanordnung zur Durchführung des Verfahrens nach dem Oberbegriff des Anspruchs 6.

Aus der DE 195 16 402 A1 ist eine Schaltungsanordnung eines Reglers mit sogenannter nachgiebiger Rückführung bekannt, bei der die Rückführung zwei Modelle beinhaltet. Ein erstes Modell realisiert eine teilweise Approximation der Regelstrecke, ein zweites Modell eine vollständige Approximation der Regelstrecke. Das Ausgangssignal des ersten Modells wird negativ rückgekoppelt, das des zweiten positiv, so daß das Ausgangssignal der beiden Modelle im stationären Zustand Null ergeben soll. Dabei ist in der Rückführung ein Filter angeordnet, dessen Eingangssignal die Differenz aus dem Ausgangssignal des zweiten Modells und der Regelstrecke ist. Dabei soll die Übertragungsfunktion des ersten Modells die instabilen Pole der Regelstrecke enthalten.

Dabei ist nachteilig, daß zwei Modelle bestimmt werden müssen, was nur mit großem Aufwand und begrenzter Genauigkeit möglich ist. Aufgrund der begrenzten Genauigkeit ist lediglich eine ungenaue Nachbildung der Regelstrecke möglich; Aufgrund der großen Ordnung der Übertragungsfunktionen der Modelle enthalten diese viele Verzögerungen, was zu Verzögerungen und damit ebenfalls zu Ungenauigkeiten führt.

Aus der DE 25 20 649 C2 ist eine Thermische Kraftanlage mit einem Sidewasserreaktor bekannt, bei der eine Regeleinrichtung mit frequenzabhängigen Regetgliedern verwendet wird. Zur Verhinderung einer instabilen Regelung wird im Regelkreis mindestens ein Resonanzfilter angeordnet, bei dem die Resonanzfrequenz des Filters mit der Frequenz des Regelkreises übereinstimmt, bei der der Regelkreis ohne Filter instabil werden würde.

Aus diesem Dokument ist lediglich ein Resonanzfilter bekannt, das bei einem Regelkreis eines Sidewasserreaktors eingesetzt wird. Dies kann dem Fachmann für Steuerungen von Werkzeugmaschinen keinen Hinweis auf einen Einsatz eines Filters in einem Drehzahlregelkreis geben. Weiterhin wird keine automatische Parametrierung des Filters im Regelkreis offenbart.

Aus der DE 34 08 551 C2 ist ein Verfahren zum Verringern von Bahnfehlern bei rechnergesteuerten Werkzeugmaschinen bekannt, bei dem Lagesollwerte der Antriebsregelkreise einem bei Bahnvektoränderungen aktivem Filter zugeleitet werden. Dabei weist das Filter ein zur Antriebsregelstrecke inverses Übertragungsverhalten auf.

Ein Nachteil dieser Realisierung besteht darin, daß das Übertragungsverhalten der Antriebsregelstrecke möglichst genau ermittelt werden muß. Dies ist jedoch nur mit großem Aufwand und begrenzter Genauigkeit möglich. Weiterhin ist keine automatische Parametrierung des Filters im Hinblick auf die Resonanzfrequenzen des Regelkreises vorgesehen.

Aus der DE 197 34 208.6 ist eine Anordnung und ein Verfahren zur Ermittlung optimaler Reglerparameter für eine Drehzahlregelung bekannt. Dabei wird der Elektromotor, für dessen Drehzahlregler die Parameter, eingestellt werden sollen, im eingebauten Zustand in der Maschine mit Testsignalen beaufschlagt. Durch diese Testsignale werden ausgewählte Reglerkomponenten angeregt. In einem iterativen Verfahren wird anschließend ausgetestet, bei welcher Verstärkung die Stabilitätsgrenze der einzelnen Komponenten des Regelkreises erreicht wird und abhängig von diesem Ergebnis werden dann die Verstärkungsfaktoren für die Reglerkomponenten eingestellt.

Dieses Verfahren weist den Nachteil auf, daß in einem oder mehreren schmalbandigen Resonanzbereichen des mechanischen Systems bestehend aus Motor und Maschine bereits bei geringen Verstärkungsfaktoren des Drehzahlreglers Schwingungen auftreten können. Um die Maschine in diesen Resonanzbereichen nicht zu Schwingungen anzuregen, können im Drehzahlregler nur geringe Verstärkungen eingestellt werden. Aufgrund der geringen Verstärkungen im Drehzahlregler werden Sollwerte nur sehr langsam erreicht, die sogenannte Anregelzeit ist daher unerwünscht groß.

Aufgabe der vorliegenden Erfindung ist es daher, ein Verfahren und eine das Verfahren realisierende Schaltungsanordnung anzugeben, um die Parameter eines Drehzahlregelkreises und eines oder mehrerer im Drehzahlregelkreis vorgesehener Filter automatisch bezüglich einer möglichst geringen Anregelzeit und einem optimalen Regelungsverhalten einstellen zu können, so daß die Maschine nicht zu Schwingungen angeregt wird. Dabei soll der zusätzliche Aufwand an Baugruppen und Verfahrensschritten möglichst gering sein.

Diese Aufgabe wird durch ein Verfahren mit den Merkmalen des Anspruchs 1 und eine Schaltungsanordnung mit den Merkmalen des Anspruchs 6 gelöst.

Vorteilhafte Ausführungsformen des erfindungsgemäßen Verfahrens und der erfindungsgemäßen Schaltungsanordnung ergeben sich aus den Merkmalen der jeweils abhängigen Ansprüche.

Bei der Ermittlung der optimalen Verstärkung des Drehzahlreglers auf bekannte Art und Weise, zumindest für den P- und I-Zweig des Drehzahlreglers, werden an der Stabilitätsgrenze des Drehzahlregelkreises gleichzeitig erfindungsgemäß die Resonanzfrequenzen der gesamten mechanischen Anordnung aus Motor und Maschine in einem für den Drehzahlregler des Motors relevanten Frequenzbereich ermittelt. In Filtern, welche sich im Drehzahlregelkreis befinden, werden dann Parameter derart eingestellt, daß Resonanzüberhöhungen im Frequenzgang gedämpft und unerwünschte Frequenzbereiche ausgeblendet werden. Dadurch wird das Ausgangssignal des Drehzahlreglers für Resonanzfrequenzen derart gedämpft, daß keine Resonanzüberhöhungen im Frequenzgang des Reglerausgangssignals mehr auftreten, d.h. ein Signal mit über der Frequenz im wesentlichen konstanter Amplitude erzeugt wird. Anschließend werden die Verstärkungsfaktoren des Reglers zur Erreichung der gewünschten Anregelzeit erhöht und erneut ermittelt, ob eine Resonanz auftritt. ist dies nicht der Fall, bleiben die Einstellungen in Filter und Regler unverändert, da nun die gewünschte Anregelzeit ohne Stabilitätsprobleme im Drehzahlregelkreis erreicht wurde. Falls Resonanzen ermittelt werden, werden die Filter derart verändert, daß die aufgetretenen Resonanzfrequenzen gedämpft werden. Nach der entsprechenden Einstellung der Filterkoeffizienten wird erneut überprüft, ob die gewünschte Anregelzeit erreicht wird und ob keine Resonanzen auftreten. Falls erforderlich wird erneut der Resonanzbereich der mechanischen Anordnung ermittelt und Verstärkungswerte im Regler sowie Filterkoeffizienten des Filters modifiziert. Dadurch können unter Benutzung ohnehin erforderlicher Verfahrensschritte zur Ermittlung der Reglerparameter zusätzlich die Filterparameter bestimmt werden.

Auf diese Weise kann vorteilhaft eine besonders kurze Anregelzeit erreicht werden, ohne daß dabei die mechanische Anordnung zu dauerhaften Schwingungen angeregt wird. Weiterhin vorteilhaft ist, daß es nicht erforderlich ist, eine mathematische Modellierung des mechanischen Systems durchführen zu müssen. Es wird vorteilhaft die mechanische Anordnung wie im regulären Betrieb mit geschlossenem Regelkreis angeregt und somit ein sehr realistisches Verhalten des mechanischen Systems ermittelt. Die dabei ermittelten Resonanzbereiche werden durch Filter gedämpft, so daß gezielt die eine Schwingung anregenden Signale gedämpft werden. Anschließend kann die Verstärkung im Regler wesentlich erhöht werden.

Einzelheiten und weitere Vorteile der Erfindung werden im folgenden anhand der in der Zeichnung dargestellten Ausführungsform näher erläutert.

Es zeigt:

Figur 1: Eine mögliche Verfahrensabfolge des erfindungsgemäßen Verfahrens,

Figur 2: ein mögliches Anregungssignal,

Figur 3: einen möglichen Frequenzverlauf mit zwei Resonanzfrequenzen,

Figur 4: eine mögliche schaltungstechnische Realisierung der erfindungsgemäßen Schaltungsanordnung,

Figur 5: den Frequenzverlauf aus Figur 3 nach einer Tiefpaßfilterung der Hauptresonanzfrequenz und

Figur 6: den Frequenzverlauf aus Figur 5 nach einer Bandsperrfilterung der weiteren Resonanzfrequenz.

Im folgenden wird von einer Anwendung der Erfindung bei einem Drehzahlregler einer numerischen Steuerung für einen Achsantrieb einer Werkzeugmaschine ausgegangen. Durch den Drehzahlregler soll dabei eine sehr kurze, vorgegebene Anregelzeit erreicht werden. Der Achsantrieb kann dabei durch einen hoch dynamischen Linearmotor oder einen herkömmlichen rotatorischen Servomotor realisiert werden.

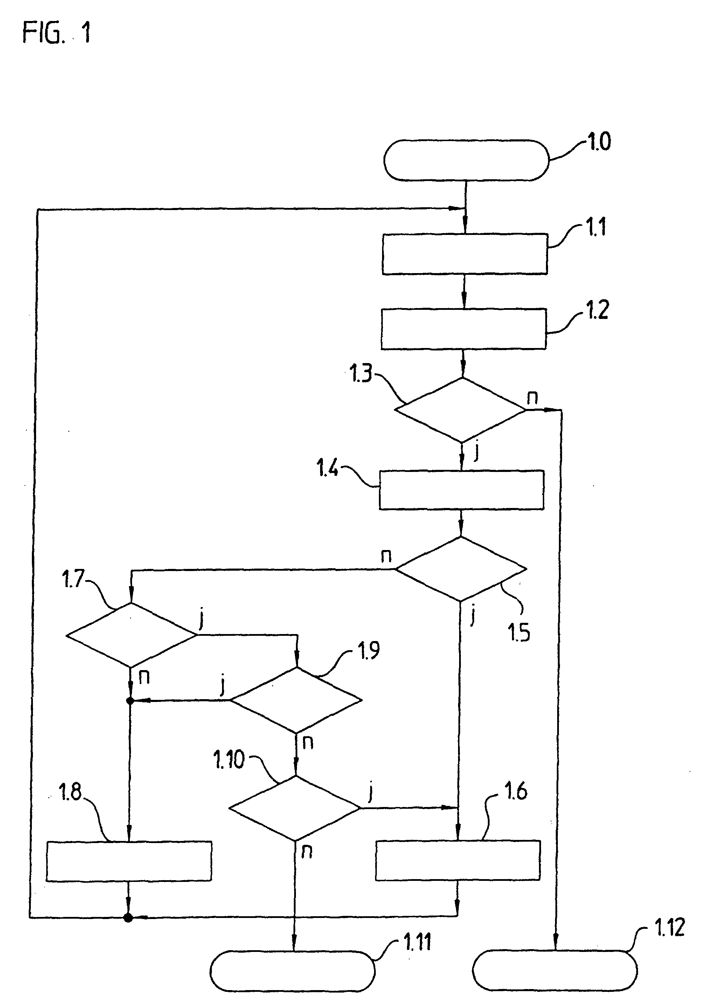

Gemäß Figur 1 wird mit dem Schritt 1.0 das aus der DE 197 34 208.6 der Anmelderin bekannte Verfahren zur Einstellung der Reglerparameter des Drehzahlreglers eingeleitet. Da ein Drehzahlregler im wesentlichen eine PI-Charakteristik aufweist, wird zunächst im Proportional-Zweig des Reglers mit Hilfe einer speziellen Bewertungsfunktion der optimale Verstärkungsfaktor für den Proportional-Zweig ermittelt. Anschließend wird dem Integral-Zweig die als optimal erkannt Verstärkung mit Hilfe einer zweiten speziellen Bewertungsfunktion ermittelt.

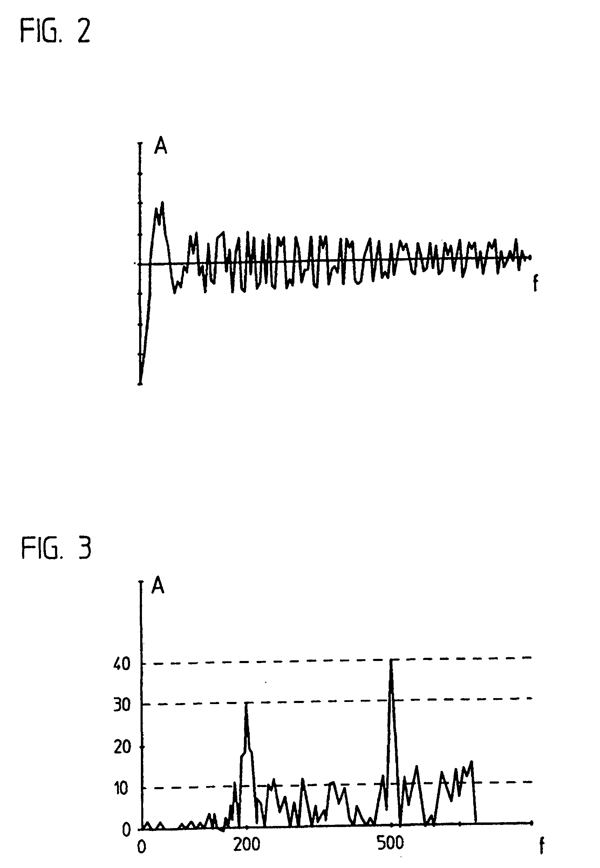

Im Schritt 1.1 wird der Verstärkungsfaktor im Proportional-Zweig des Reglers gemäß dem oben beschriebenem Verfahren im bekannten, geschlossenen Regelkreis ermittelt. Dafür wird die Verstärkung im Proportional-Zweig des Reglers kurzzeitig derart erhöht, daß eine Dauerschwingung im Regelkreis auftritt. Während der Dauerschwingung wird der im Regelkreis rückgekoppelte Istwert über ein bestimmtes Zeitintervall hinweg durch einen Prozessor 4.4 erfaßt und einer Fourier-Transformation unterworfen. Dadurch erhält man beispielsweise das in Figur 3 dargestellte Spektrum für einen interessierenden Frequenzbereich.

Der interessierende Frequenzbereich wird voreingestellt, seine obere Grenze wird durch die Dynamik des Motors und die Zykluszeit des Regelkreises festgelegt. Bei einem herkömmlichen rotatorischen Motor mit einem herkömmlichen Regelkreis können Signale bis ca. 2 kHz, bei einem hoch dynamischen Linearmotor derzeit bis ca. 5 kHz von Interesse sein. Der interessierende Frequenzbereich wird durch die Regelzykluszeit des Drehzahlregelkreises, die auf die Dynamik des verwendeten Motors abgestimmt ist, bestimmt. Die Regelzykluszeit kann beispielsweise bei ca. 2 ms liegen, so daß sich der interessierende Frequenzbereich bis ca. 500 Hz erstreckt.

An dem Spektrum des rückgekopppelten Istwerts im Regelkreis wird eine erste Resonanzfrequenz unmittelbar an der maximalen Amplitude erkannt, die für eine Erhöhung der Verstärkungsfaktoren im Drehzahlregler und damit zur Verringerung der Anregelzeit im PI-Regler durch ein in den Regelkreis einzufügendes Filter 4.2.1 gedämpft werden muß.

Danach wird im Schritt 1.2 der Verstärkungsfaktor im Integral-Zweig ebenfalls nach dem oben bereits beschriebenem Verfahren ermittelt. Anschließend wird die Anregelzeit $t_{a,\,ist}$ des Systems gemessen und im Schritt 1.3 mit einem Sollwert $t_{a,\,soll}$ verglichen. Ist die gemessene Anregelzeit $t_{a,\,ist}$ kürzer als die gewünschte Anregelzeit $t_{a,\,soll}$, ist kein Filtereinsatz und keine weitere Veränderung der Reglerverstärkungen erforderlich. Das Verfahren kann dann in Schritt 1.12 beendet werden.

Oftmals wird aber die gemessene Anregelzeit $t_{a,\,ist}$ noch größer als die gewünschte Anregelzeit $t_{a,\,soll}$ sein und gemäß dem erfindungsgemäßen Verfahren wird in Schritt 1.5 der Dämpfungsfaktor $K_s$ des einzufügenden Filters für die Resonanzfrequenz als Quotient aus der gemessenen Anregelzeit $t_{a,\,ist}$ durch die gewünschte Anregelzeit $t_{a,\,soll}$ zumindest näherungsweise bestimmt gemäß:

$$K_s = \frac{t_{a,ist}}{t_{a,soll}}. \tag{1}$$

Da im gewählten Ausführungsbeispiel zwei Resonanzfrequenzen im relevanten Frequenzbereich auftreten, wird zur Dämpfung der niedrigeren Resonanzfrequenz eine Bandsperre 4.2.2 und zur Dämpfung der höheren Resonanzfrequenz ein Tiefpaß 4.2.1 gewählt, der zusätzlich auch höherfrequente Störungen unterdrückt. Für den Fall, daß im relevanten Frequenzbereich mehr als zwei Resonanzfrequenzen auftreten, wird zur Unterdrückung der oberhalb des interessierenden Frequenzbereichs liegenden Resonanzfrequenzen und weiterer hochfrequenter Störungen ein Tiefpaß gewählt, dessen Grenzfrequenz so gewählt wird, daß die am Rand des interessierenden Frequenzbereichs liegende Resonanzfrequenz mit dem erforderlichen Dämpfungsfaktor Ks gedämpft wird. Die verbleibenden Resonanzfrequenzen im interessierenden Frequenzbereich werden durch Bandsperren gedämpft, deren Dämpfung und Mittenfrequenz entsprechend der jeweiligen Resonanzüberhöhung und Resonanzfrequenz gewählt werden. Im folgenden wird zur Vereinfachung davon ausgegangen, daß nur zwei Resonanzfrequenzen im interessierenden Frequenzbereich bis 500 Hz auftreten, von denen die höhere durch einen Tiefpaß 4.2.1 und von denen die niedrigere durch eine Bandsperre 4.2.2 gedämpft werden.

In Schritt 1.5 wird ermittelt, ob die Resonanzfrequenz oberhalb einer Grenzfrequenz für den Einsatz eines Tiefpaßfilters 4.2.1 liegt. Dies ist erforderlich, da ansonsten durch einen Tiefpaß 4.2.1 mit niedriger Grenzfrequenz schnelle Reglerausgangssignale gedämpft würden und somit schnelle Regelvorgänge unmöglich würden.

in Schritt 1.6 werden die Parameter eines Tiefpasses 4.2.1 entsprechend dem interessierenden Frequenzbereich und der an dessen Obergrenze auftretenden Resonanzfrequenz sowie entsprechend der bei dieser Resonanzfrequenz gewünschten Dämpfung Ks im Filter eingestellt.

Als Tiefpaß 4.2.1 kann dabei ein digitaler Tiefpaß zweiter Ordnung gewählt werden, dessen Filterkoeffizienten entsprechend der gewünschten Grenzfrequenz und Dämpfung durch einen ohnehin vorhandenen Prozessor 4.4 berechnet werden. Alternativ sind auch andere Filter mit Tiefpaßcharakteristik möglich, insbesondere höherer Ordnung.

Nachdem nunmehr das Ausgangssignal des Drehzahlreglers 4.1 tiefpaßgefiltert und dadurch die Resonanzüberhöhung gedämpft wird, erfolgt eine neue Festlegung der Verstärkungsfaktoren des Drehzahlreglers 4.1 im Proportional- und Integral-Zweig in Schritt 1.1 und 1.2. Aufgrund der eingeführten Dämpfung Ks werden die Verstärkungsfaktoren vergrößert und damit die Anregelzeit $t_{a,ist}$ verringert. Gleichzeitig werden die noch vorhandenen Resonanzfrequenzen und die nunmehr erreichte Anregelzeit $t_{a,ist}$ ermittelt. In Schritt 1.3 wird dann überprüft, ob die aufgrund der Tiefpaßfilterung verbesserte Anregelzeit $t_{a,ist}$ bereits kleiner als die gewünschte Anregelzeit $t_{a,soll}$ ist. Ist dies der Fall, ist keine Bandsperre 4.2.2 mehr erforderlich und die eingestellten Verstärkungen im Drehzahlregler 4.1 und die Filterparameter des Tiefpasses 4.2.1 werden in Schritt 1.12 für den regulären Betrieb übernommen.

Wird die gewünschte Anregelzeit $t_{a,soll}$ noch nicht erreicht, wird im Schritt 1.4 der erforderliche Dämpfungsfaktor Ks für die Bandsperre 4.2.2 gemäß obiger Gleichung (1) ermittelt. Anschließend wird im Schritt 1.5 zu Schritt 1.7 verzweigt, da die verbleibende Resonanzfrequenz kleiner ist als die Grenzfrequenz des Tiefpasses, welche die obere Grenze des interessierenden Frequenzbereichs definiert. In Schritt 1.7 wird festgestellt, ob bereits eine Bandsperre 4.2.2 aktiviert ist.

Ist dies noch nicht der Fall, werden im Schritt 1.8 die Dämpfung der Bandsperre 4.2.2 entsprechend der berechneten Dämpfung Ks und die Mittenfrequenz der Bandsperre 4.2.2 entsprechend der ermittelten Resonanzfrequenz eingestellt.

Anschließend werden gemäß den Verfahrensschritten 1.1 und 1.2 die Verstärkungsfaktoren im Proportional- und Integral-Zweig des Reglers 4.1 neu bestimmt. Nachdem somit nun auch die Bandsperre 4.2.2 für die zweite Resonanzfrequenz aktiviert wurde, werden beide Resonanzfrequenzen des Ausführungsbeispiels gedämpft und aufgrund der neu bestimmten, größeren Verstärkungsfaktoren verringert sich die Anregelzeit $t_{a,ist}$. In der Regel wird in Schritt 1.3 dann die bei den neuen Verstärkungsfaktoren des Drehzahlreglers gemessene Anregelzeit $t_{a,ist}$ unterhalb der gewünschten Anregelzeit $t_{a,soll}$ liegen und das Verfahren wird in Schritt 1.12 beendet, nachdem in den Filtern 4.2.1 und 4.2.2 sowie im Drehzahlregler 4.1 durch den Prozessor 4.4 die ermittelten Parameter eingestellt wurden.

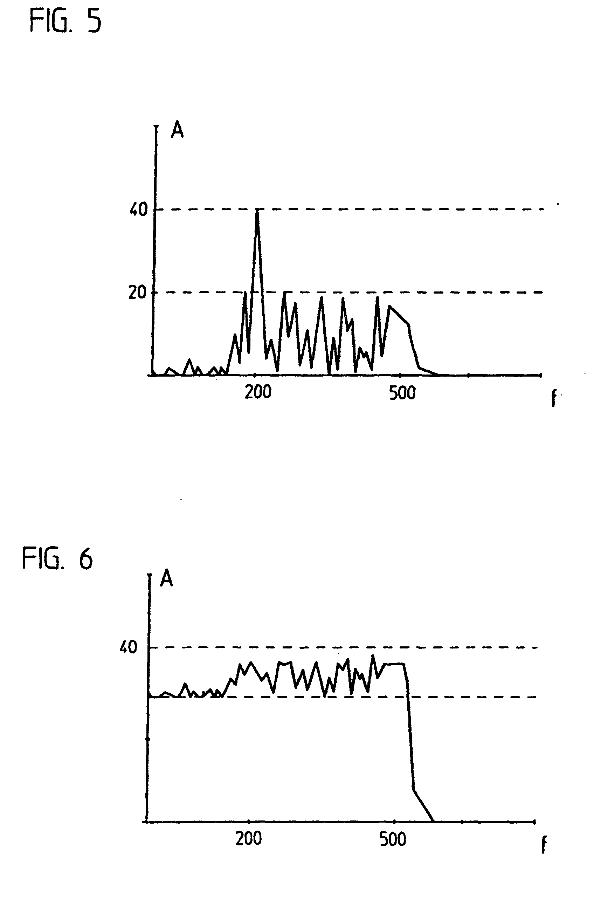

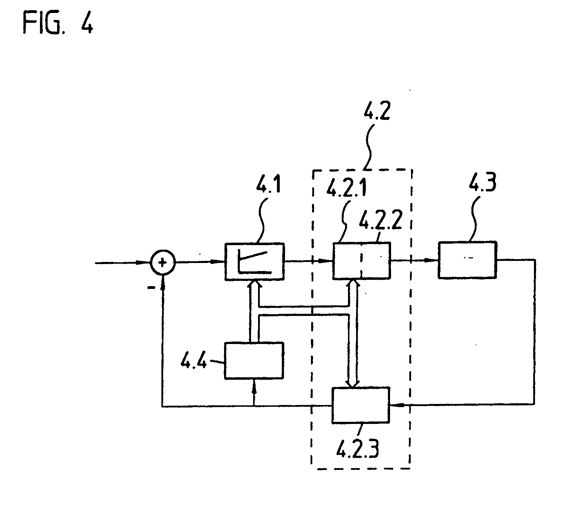

Sollte trotz Dämpfung der beiden Resonanzfrequenzen aus Figur 4 die Anregelzeit $t_{a,ist}$ noch zu lang sein, wird in Schritt 1.4 erneut der Dämpfungsfaktor Ks gemäß Gleichung (1) bestimmt und im Schritt 1.5 ermittelt, ob die Resonanzfrequenz über der Grenzfrequenz des Tiefpasses liegt oder nicht. Falls sie darüber liegt, werden die Filterparameter des Tiefpasses 4.2.1 neu bestimmt und dadurch eine verbesserte Dämpfung von Störsignalen erreicht, die außerhalb des interessierenden Frequenzbereichs liegen. Liegt die Resonanzfrequenz unterhalb der Grenzfrequenz des Tiefpasses 4.2.1, wird zu Schritt 1.7 verzweigt und dort zu Schritt 1.9, da bereits eine Bandsperre 4.2.2 aktiv ist.

In Schritt 1.9 wird überprüft, ob für diese Resonanzfrequenz bereits eine Bandsperre 4.2.2 vorgesehen ist und gegebenenfalls deren Parameter neu bestimmt. Dadurch erfolgt eine Feinanpassung der Filtercharakteristik der Bandsperre 4.2.2 an die durch die zwischenzeitlich aktivierten Filter 4.2.1 und 4.2.2 eventuell geringfügig veränderte Charakteristik des Drehzahlregelkreises. Liegt die Resonanzfrequenz oberhalb der Mittenfrequenz der Bandsperre 4.2.2, wird in Schritt 1.10 zu Schritt 1.6 verzweigt und es werden die Parameter des Tiefpasses 4.2.1 neu bestimmt. Dadurch erfolgt eine Feinanpassung der Filtercharakteristik des Tiefpasses 4.2.1 an die durch die zwischenzeitlich aktivierten Filter 4.2.1 und 4.2.2 geringfügig veränderte Charakteristik des Drehzahlregelkreises.

Liegt die Resonanzfrequenz unterhalb der Mittenfrequenz der vorhandenen Bandsperre 4.2.2, werden gemäß dem Ausführungsbeispiel die Einstellungen mit dem Ergebnis beendet, daß eine weitere Verbesserung der Anregelzeit nicht möglich ist.

Alternativ besteht natürlich die Möglichkeit an dieser Stelle eine weitere Bandsperre einzufügen, die die weitere Resonanzfrequenz dämpft. Durch jede zusätzliche Bandsperre könnte somit eine zusätzliche Resonanzfrequenz gedämpft und die Anregelzeit $t_{a,ist}$ verbessert werden.

Alternativ besteht auch die Möglichkeit anstatt mehrerer Filter nur ein einziges Filter höherer Ordnung zu verwenden, das die Funktion des Tiefpasses 4.2.1 und der Bandsperren 4.2.2 realisiert, d.h. das bei jeder Resonanzfrequenz des Antriebssystems eine definierte Dämpfung Ks aufweist und hohe Frequenzen vollständig unterdrückt.

Das erfindungsgemäße Verfahren wird benutzergesteuert gestartet und läuft anschließend automatisch ab. Weist der Regelkreis einen entsprechenden Anschluß über eine parallele oder serielle Schnittstelle an ein Datennetz (Local Area Network oder Wide Area Network, wie z.B. Internet) auf, kann die Ermittlung der Parameter für Regler und Filter des Regelkreises auch ferngesteuert gestartet werden. Die neu ermittelten Parameter für Regler und Filter werden entweder unmittelbar eingestellt oder zunächst erst an den Benutzer übermittelt, der die Parameter dann selbst einstellen kann.

In den Figuren 5 und 6 ist die Wirkung des erfindungsgemäßen Verfahrens exemplarisch dargestellt. Ausgegangen wird von dem in Figur 3 dargestellten Signalverlauf, der bei 500 Hz eine Hauptresonanz aufweist und bei 200 Hz eine weitere Resonanz und der bei einer normierten Amplitude von 40 der Hauptresonanz an der Stabilitätsgrenze ist. Diese Kenngrößen werden in den Schritten 1.1 und 1.2 automatisch durch das erfindungsgemäße Verfahren ermittelt. Anschließend wird zunächst eine Tiefpaßfilterung auf die Hauptresonanz bei 500 Hz angewendet, da diese Frequenz an der Grenze des interessierenden Frequenzbereichs liegt. Dieser wird durch die Regelzykluszeit des Drehzahlregelkreises bestimmt, die beispielsweise bei ca. 2 ms liegt und somit der interessierende Frequenzbereich sich bis ca. 500 Hz erstreckt. Die Resonanzüberhöhung bei 500 Hz wird beseitigt und die Verstärkungsfaktoren im Drehzahlregler können bei einem zweiten Verfahrensdurchlauf derart erhöht werden, daß nunmehr die Resonanz bei 200 Hz die Stabilitätsgrenze des Regelkreises bestimmt, wie in Figur 5 dargestellt.

Diese Resonanz wird bei einem zweiten Verfahrensdurchlauf durch eine Bandsperre ebenfalls gedämpft, so daß durch die Filterbaugruppe ein Ausgangssignal ohne wesentliche Resonanzüberhöhungen erzeugt wird. Nunmehr können wiederum die Verstärkungsfaktoren im Drehzahlregler vergrößert werden, bis die Stabilitätsgrenze des Regelkreises erreicht ist, bzw. leicht unterschritten wird.

Dadurch wird das in Figur 6 dargestellte Ausgangssignal erzeugt. Da alle Resonanzfrequenzen beseitigt sind, bzw. die beiden zur Verfügung stehenden Filter Tiefpaß 4.2.1 und Bandsperre 4.2.2 beide benutzt werden, konnten derart die Verstärkungen im Drehzahlregler auf einen optimalen Wert vergrößert und die Anregelzeit $t_{a,ist}$ des Regelkreises entsprechend verringert werden.

Die erfindungsgemäße Schaltungsanordnung in Figur 4 weist in einem Drehzahlregelkreis für einen Elektromotor 4.3 einer Werkzeugmaschine eine Filterbaugruppe 4.2 auf. Diese Filterbaugruppe 4.2 ist unmittelbar nach dem Drehzahlregler 4.1 angeordnet und filtert das dem Elektromotor 4.3 zugeleitete Steuersignal für die Motorströme. Die Filterbaugruppe 4.2 kann durch mehrere Filter niedriger Ordnung, wie beispielsweise einen Tiefpaß 4.2.1 zweiter Ordnung und eine Bandsperre 4.2.2, oder durch einen einzigen Filter höherer Ordnung realisiert werden. Entscheidend ist lediglich, daß die zur Dämpfung von Resonanzüberhöhungen erforderliche Fiftercharakteristik durch die Filterbaugruppe 4.2 realisiert wird. Die Anordnung der Filter 4.2.1, 4.2.2, 4.2.3 ist an einer beliebigen Stelle im Drehzahlregelkreis möglich. Werden mehrere Filter zur Dämpfung von Resonanzüberhöhungen verwendet, können diese auch an unterschiedlichen Stellen im Drehzahlregelkreis angeordnet werden.

Die Regeistrecke besteht aus dem Elektromotor 4.3 und den daran angeschlossenen mechanischen Komponenten. Bei einem Achsantrieb sind dies beispielsweise Kupplung, Kugelumfaufspindel und Schlitten, auf dem das Werkstück befestigt wird. Dadurch gehen beispielsweise auch deren Trägheitsmomente und Reibungsverluste in die Bestimmung der Regler- und Filterparameter mit ein. Um möglichst alle im Betrieb auftretenden Einflüsse möglichst genau zu berücksichtigen wird das Verfahren zudem bei geschlossenem Regelkreis durchgeführt.

Um das erfindungsgemäße Verfahren durchführen zu können, ist es erforderlich, daß die verwendeten Filter 4.2.1, 4.2.2 und 4.2.3 und auch der verwendete Drehzahlregler 4.1 derart ausgestaltet sind, daß deren Parameter insbesondere durch einen Prozessor 4.4 veränderbar sind. Dafür ist eine Verbindung zwischen dem Regler 4.1 und dem Prozessor 4.4 sowie zwischen den Filtern 4.2.1, 4.2.2 und 4.2.3 und dem Prozessor 4.4 vorgesehen, über die der Prozessor 4.4 die berechneten Parameter überträgt. Weiterhin weist der Prozessor 4.4 eine Schnittstelle auf, über die ein Startsignal an den Prozessor 4.4 zum Starten des Verfahrens zur Ermittlung der Regterparameter und Filterparameter sowie weitere Daten übertragen werden können. Diese Schnittstelle kann parallel oder seriell ausgeführt und als Verbindung zu einem local area network oder einem wide area network, wie dem internet, benutzt werden.

Weiterhin ist es erforderlich, daß ein Anregungssignal dem geschlossenen Regelkreis zugeleitet werden kann, um die Schwingneigung des Regelkreises bei einer definierten Anregung ermitteln zu können. Hierfür ist eine Schaltungsanordnung vorgesehen, über die ein Signalgenerator für das Anregungssignal mit dem Regelkreis verbunden wird.

Die vorliegende Erfindung kann in allen Regelkreisen eingesetzt werden, bei denen durch mindestens eine schmalbandige Resonanzüberhöhung die Regelkreisdynamik verringert wird, wobei sehr unterschiedliche Regelstrekken vorliegen können.

**Patentansprüche**

1. Verfahren zur automatischen Parametrierung eines schnellen digitalen Drehzahlregelkreises bei Elektroantrieben, insbesondere für Werkzeugmaschinen und Roboter, bei dem Reglerparameter eines Reglers (4.1) mit Zweigen unterschiedlicher Reglercharakteristik für einen oder mehrere Zweige des Reglers (4.1) separat ermittelt werden (1.1, 1.2), indem einzelne oder mehrere Zweige des Reglers eines geschlossenen Regelkreises separat durch ein spezielles Anregungssignal angeregt werden und die Reglerparameter eines oder mehrerer Zweige so lange verändert werden, bis ein bezüglich einer Bewertungsfunktion optimales Reglerverhalten erreicht wurde, **dadurch gekennzeichnet, daß** durch Verändern der Reglerparameter der Regelkreis an die Stabilitätsgrenze gebracht wird (1.1), daß an der Stabilitätsgrenze eine oder mehrere Resonanzfrequenzen des Regelkreises ermittelt werden (1.1), daß Filterparameter eines oder mehrere Filter (4.3) derart bestimmt werden (1.6, 1.8), daß die ermittelten Resonanzfrequenzen entsprechend einer gewünschten Anregelzeit ($t_{a,soll}$) gedämpft werden und daß anschließend die Reglerparameter erneut bestimmt werden (1.1, 1.2).

2. Verfahren nach Anspruch 1, **dadurch gekennzeichnet, daß** das Verfahren iterativ für jede Resonanzfrequenz des Regelkreises erneut durchgeführt wird.

3. Verfahren nach Anspruch 1 oder 2, **dadurch gekennzeichnet, daß** der Dämpfungsfaktor (Ks) der Filter (4.2) als Quotient aus der tatsächlichen Anregelzeit ($t_{a,ist}$) durch eine gewünschte Anregelzeit ($t_{a,soll}$) berechnet wird.

4. Verfahren nach einem der Ansprüche 1 bis 3, **dadurch gekennzeichnet, daß** die Filtercharakteristiken eines oder mehrerer ermittelter Filter (4.2) durch wiederholtes Anwenden des Verfahrens an die durch die Filter (4.2) veränderte Charakteristik des Drehzahlregelkreises feinangepaßt werden.

5. Verfahren nach einem der Ansprüche 1 bis 4, **dadurch gekennzeichnet, daß** zur Dämpfung von Resonanzfrequenzen, die oberhalb einer Grenzfrequenz liegen, eine einzige Tiefpaßfilterung und zur Dämpfung von Resonanzfrequenzen, die unterhalb dieser Grenzfrequenz liegen, jeweils eine Bandsperrfilterung durchgeführt wird.

6. Schaltungsanordnung zur Durchführung des Verfahrens nach Anspruch 1, bestehend aus zumindest einem Regler (4.1), einer Regelstrecke und einer Rückkopplungsstruktur, wobei die Regelstrekke aus einem Motor (4.3) und dem von dem Motor (4.3) angetriebenen mechanischen System besteht, **dadurch gekennzeichnet, daß** im Regelkreis eine Filtertaugruppe (4.2) vorgesehen ist.

7. Schaltungsanordnung nach Anspruch 6, **dadurch gekennzeichnet, daß** die Filterbaugruppe (4.2) einen Tiefpaßfilter (4.2.1) beinhaltet.

8. Schaltungsanordnung nach Anspruch 6 oder 7, **dadurch gekennzeichnet, daß** die Filterbaugruppe (4.2) mindestens einen Bandsperrfilter (4.2.2) beinhaltet.

9. Schaltungsanordnung nach einem der Ansprüche 6 bis 8, **dadurch gekennzeichnet, daß** die Filterbaugruppe (4.2) mindestens einen FIR-Filter (4.2.3) beinhaltet.

10. Schaltungsanordnung nach einem der Ansprüche 6 bis 9, **dadurch gekennzeichnet, daß** die Filterbaugruppe (4.2) zwischen dem Regler (4.1) und dem Motor (4.3) angeordnet ist.

**11.** Schaltungsanordnung nach einem der Ansprüche 8 bis 9, **dadurch gekennzeichnet, daß** die Filter (4.2.1, 4.2.2, 4.2.3) der Filterbaugruppe (4.2) an unterschiedlichen Stellen im Regelkreis angeordnet sind.

**12.** Schaltungsanordnung nach einem der Ansprüche 6 bis 9 und 11, **dadurch gekennzeichnet, daß** der FIR-Filter (4.2.3) Im Rückkopplungszweig des Regelkreises angeordnet ist.

**13.** Schaltungsanordnung nach einem der Ansprüche 6 bis 12, **dadurch gekennzeichnet, daß** die Filter (4.2.1, 4.2.2, 4.2.3) der Filterbaugruppe (4.2) und der Regler (4.1) derart ausgestaltet sind, daß ihre Parameter durch eine Steuereinheit (4.4) einstellbar sind.

**14.** Schaltungsanordnung nach einem der Ansprüche 6 bis 13, **dadurch gekennzeichnet, daß** der Regelkreis derart ausgestaltet ist, daß dem geschlossenen Regelkreis ein Anregungssignal zugeleitet werden kann.

**15.** Schaltungsanordnung nach einem der Ansprüche 6 bis 14, **dadurch gekennzeichnet, daß** der Prozessor (4.4) eine Schnittstelle zu einem Datennetz aufweist.

**Claims**

**1.** A method for automatically parameterizing a fast digital speed control loop in electric drives, especially for machine tools and robots, in which the controller parameters of a controller (4.1) having branches with different controller characteristics are determined separately (1.1, 1.2) for one or more branches of the controller (4.1), in that individual branches or a plurality of branches of the controller of a closed control loop are excited separately by a special excitation signal, and the controller parameters of one or more branches are modified for so long until an optimal controller performance is reached with respect to an evaluation function, **characterized in that** by altering the controller parameters, the control loop is brought (1.1) to the stability limit, **in that** one or more resonance frequencies of the control loop are determined (1.1) at the stability limit, **in that** filter parameters of one or more filters (4.3) are determined (1.6, 1.8) in such a way that the ascertained resonance frequencies are damped in accordance with a desired rise time ($t_{a,setpoint}$), and that the controller parameters are subsequently redefined (1.1, 1.2).

**2.** A method according to Claim 1, **characterized in that** the method is carried out anew, iteratively, for each resonance frequency of the control loop.

**3.** A method according to Claim I or 2, **characterized in that** the damping factor Ks of the filters (4.2) is calculated as a quotient of the actual rise time ($t_{a, actual}$ divided by a desired rise time ($t_{a,setpoint}$).

**4.** A method according to any of Claims 1 to 3, **characterized in that** the filter characteristics of one or more ascertained filters (4.2) are finely adjusted to the characteristics of the speed control loop modified by the filters (4.2) through repeated application of the method.

**5.** A method according to any of Claims 1 to 4, **characterized in that** a single low-pass filtering is carried out to damp resonance frequencies which lie above a limit frequency, and a band-stop filtering is carried out to damp resonance frequencies which lie below this limit frequency.

**6.** A circuit arrangement for carrying out the method according to claim 1, consisting of at least one controller (4.1), a controlled system, and a feedback structure, wherein the controlled system consists a motor (4.3) and the mechanical system driven by the motor (4.3), **characterized in that** a filter module (4.2) is provided in the control loop.

**7.** A circuit arrangement according to Claim 6, **characterized in that** the filter module (4.2) includes a low-pass filter (4.2.1).

**8.** A circuit arrangement according to Claim 6 or 7, **characterized in that** the filter module (4.2) includes at least one band-stop filter (4.2.2).

**9.** A circuit arrangement according to any of Claims 6 to 8, **characterized in that** the filter module (4.2) includes at least one FIR filter (4.2.3).

**10.** A circuit arrangement according to any of Claims 6 to 9, **characterized in that** the filter module (4.2) is arranged between the controller (4.1) and the motor (4.3).

**11.** A circuit arrangement according to any of Claims 6 to 9, **characterized in that** the filters (4.2.1, 4.2.2, 4.2.3) of the filter module (4.2) are arranged at different locations in the control loop.

**12.** A circuit arrangement according to any of Claims 6 to 9 and 11, **characterized in that** the FIR filter (4.2.3) is arranged in the feedback branch of the control loop.

**13.** A circuit arrangement according to any of Claims 6 to 12, **characterized in that** the filters (4.2.1, 4.2.2, 4.2.3) of the filter module (4.2) and the controller (4.1) are so designed that their parameters can be modified by a control unit (4.4).

**14.** A circuit arrangement according to any of Claims 6 to 13, **characterized in that** the control loop is so designed that an excitation signal can be applied to the closed-loop control circuit.

**15.** A circuit arrangement according to any of Claims 6 to 14, **characterized in that** the processor (4.4) has an interface to a data network.


**Revendications**

**1.** Procédé pour paramétrer de manière automatique un circuit de régulation de vitesse numérique rapide pour des entraînements électriques, en particulier pour des machines-outils et des robots, dans lequel des paramètres de réglage d'un régulateur (4.1) avec des branches présentant des caractéristiques de régulation différentes pour une ou plusieurs branches du régulateur (4.1) sont déterminées séparément (1.1, 1.2) en excitant des branches individuelles ou plusieurs branches du régulateur d'un circuit de régulation fermé par un signal d'excitation spécial et en faisant varier les paramètre de réglage d'une ou de plusieurs branches jusqu'à l'obtention d'un comportement de régulation optimal du point de vue d'une fonction d'évaluation, **caractérisé en ce que** par variation des paramètres de réglage on amène le circuit de régulation à la limite de stabilité (1.1), **en ce que** à la limite de stabilité, on détermine une ou plusieurs fréquences de résonance du circuit de régulation (1.1), **en ce qu'**on détermine des paramètres de filtre d'un ou de plusieurs filtres (4.3) de telle sorte (1.6, 1.8) que les fréquences de résonance déterminées soient amorties conformément au temps de réglage ($t_{a,\,soll}$) souhaité et **en ce qu'**ensuite on détermine à nouveau les paramètres de réglage (1.1, 1.2).

**2.** Procédé selon la revendication 1, **caractérisé en ce qu'**on répète le procédé de manière itérative pour chaque fréquence de résonance du circuit de régulation

**3.** Procédé selon la revendication 1 ou 2, **caractérisé en ce qu'**on calcule le facteur d'amortissement (Ks) des filtres (4.2) en tant que quotient du temps de réglage ($t_{a,\,ist}$) réel par le temps de réglage ($t_{a,\,soll}$) souhaité.

**4.** Procédé selon une des revendications 1 à 3, **caractérisé en ce qu'**on procède à une adaptation fine des caractéristiques de filtre d'un ou de plusieurs filtres (4.2) par application répétée du procédé à la caractéristique du circuit de régulation de vitesse modifiée par les filtres (4.2).

**5.** Procédé selon une des revendications 1 à 4, **caractérisé en ce que** pour l'amortissement des fréquences de résonance situées au-dessus de la fréquence limite, on réalise un filtrage passe-bas unique et, pour l'amortissement des fréquences de résonance situées en-dessous de la fréquence limite, on réalise un filtrage coupe-bande

**6.** Agencement de circuit pour la réalisation du procédé selon la revendication I, comprenant au moins un régulateur (4.1), un système réglé et une structure de rétroaction, le système réglé comprenant un moteur (4.3) et un système mécanique entraîné par le moteur (4.3), **caractérisé en ce qu'**un système de filtres (4.2) est disposé dans le circuit de régulation.

**7.** Agencement de circuit selon la revendication 6, **caractérisé en ce que** le système de filtres (4.2) comprend un filtre passe-bas (4.2.1).

**8.** Agencement de circuit selon la revendication 6 ou 7, **caractérisé en ce que** le système de filtres (4.2) comprend au moins un filtre coupe-bande (4.2.2).

**9.** Agencement de circuit selon une des revendications 6 à 8, **caractérisé en ce que** le système de filtres (4.2) comprend au moins un filtre FIR (4.2.3).

**10.** Agencement de circuit selon une des revendications 6 à 9, **caractérisé en ce que** le système de filtres (4.2) est disposé entre le régulateur (4.1) et le moteur (4.3).

**11.** Agencement de circuit selon une des revendications 6 à 9, **caractérisé en ce que** les filtres (4.2.1, 4.2.2, 4.2.3) du système de filtres (4.2) sont disposés en différents points dans le circuit de régulation.

**12.** Agencement de circuit selon une des revendications 6 à 9 et 11, **caractérisé en ce que** le filtre FIR (4.2.3) est disposé dans la branche de rétroaction du circuit de régulation.

**13.** Agencement de circuit selon une des revendications 6 à 12, **caractérisé en ce que** les filtres (4.2.1, 4..2, 4.2.3) du système de filtres (4.2) et le régulateur (4.1) sont agencés de telle sorte que leurs paramètres soient réglables à l'aide d'une unité de commande (4.4).

**14.** Agencement de circuit selon une des revendications 6 à 13, **caractérisé en ce que** le circuit de régulation est agencé de telle sorte qu'un signal d'excitation puisse être envoyé au circuit de régulation fermé.

**15.** Agencement de circuit selon une des revendications 6 à 14, **caractérisé en ce que** le processeur (4.4) comporte une interface vers un réseau de données.

FIG. 1

FIG. 2

FIG. 3

## FIG. 5

## FIG. 6

FIG. 4